# EUROPEAN PATENT APPLICATION

(11) **EP 4 618 488 A1**
(43) Date of publication of application: **17.09.2025**
(21) Application number: 22966151.7
(22) Date of filing: 24.11.2022
(51) Int. Cl.: H04L 27/00

(54) **CONTROLLER UPGRADING METHOD, AND APPARATUS**

(71) Applicant: Shenzhen Yinwang Intelligent Technologies Co., Ltd., Shenzhen, Guangdong 518129 (CN)
(72) Inventor: HE, Lang, Shenzhen, Guangdong 518129 (CN); WU, Zixian, Shenzhen, Guangdong 518129 (CN); WU, Huanyu, Shenzhen, Guangdong 518129 (CN); XU, Caili, Shenzhen, Guangdong 518129 (CN)
(74) Representative: MERH-IP Matias Erny Reichl Hoffmann Patentanwälte PartG mbB
(86) International application number: PCT/CN2022/133870
(87) International publication number: WO 2024/108456

(57) **Abstract**

A method and an apparatus for upgrading a controller are provided. The method includes: The controller first upgrades, based on a bootloader BL program upgrade package in an upgrade file, a BL program in a first storage area used as a backup storage area in the controller, and sets the first storage area as a running storage area and sets a second storage area as the backup storage area after the upgrade succeeds. During upgrade of the BL program in one storage area, the BL program in the other storage area may be used to provide a service, to avoid bricking the controller as a result of power-off in an upgrade process of the BL program, and improve a success rate of remote upgrade.

## Description

### TECHNICAL FIELD

This application relates to the field of vehicle diagnosis information technologies, and in particular, to a method and an apparatus for upgrading a controller.

### BACKGROUND

With evolution of vehicle electronic and electrical architectures, there are many important electronic control units in new energy vehicles, and during booting, most electronic control units need to be booted by using a bootloader (Bootloader, BL) program. The BL program is a first segment of code that is run after a system is powered on or reset, and main functions of the BL program include initialization, application security verification, and loading. For a non-dual-backup controller, the BL program further has a unified diagnostic service (unified diagnostic service, UDS) flashing function, and updates an application (application program, APP) in a BL program mode. After the controller is mass-produced, a program loaded to the controller may have an error, and software optimization or bug (bug) repair is required.

Currently, a dual-backup controller backs up an app, and the app can be upgraded when the app is run in an app mode. Although the BL program can also be upgraded in the app mode in terms of mechanisms, because the BL program is responsible for basic booting initialization and app loading the app, during upgrade of the BL program, the controller is easily bricked as a result of power-off, and remote upgrade cannot be reliably performed.

### SUMMARY

This application provides a method and an apparatus for upgrading a controller, to improve a success rate of remote upgrade.

A first aspect of this application provides a method for upgrading a controller, where the controller includes a first storage area and a second storage area, a bootloader (Bootloader, BL) program is separately stored in the first storage area and the second storage area, and the method includes: obtaining an upgrade file, where the upgrade file includes a BL program upgrade package; upgrading the BL program in the first storage area based on the BL program upgrade package, where the first storage area is a backup storage area, and the second storage area is a running storage area; and when the BL program in the first storage area is successfully upgraded, setting the first storage area as the running storage area and setting the second storage area as the backup storage area.

In the foregoing aspect, the BL program in the first storage area used as the backup storage area in the controller is first upgraded based on the BL program upgrade package in the upgrade file. After the upgrade succeeds, the first storage area is set as the running storage area, and the second storage area is set as the backup storage area. During upgrade of the BL program in one storage area, the BL program in the other storage area may be used to provide a service, to avoid bricking the controller as a result of power-off in an upgrade process of the BL program, and improve a success rate of remote upgrade.

In a possible implementation, after the setting the first storage area as the running storage area and setting the second storage area as the backup storage area, the method further includes: upgrading the BL program in the second storage area based on the BL program upgrade package.

In the foregoing possible implementation, after the first storage area is changed to the running storage area, the BL program in the second storage area currently used as the backup storage area may further continue to be upgraded, so that when the first storage area is faulty, the second storage area that has a latest BL program may be switched to for running. This improves user experience.

In a possible implementation, before the upgrading the BL program in the first storage area based on the BL program upgrade package in the foregoing steps, the method further includes: receiving a version number obtaining request from a host computer; sending a bootloader version number of an application app in the first storage area to the host computer based on the version number obtaining request; and when the bootloader version number is in a blacklist, receiving an instruction from the host computer, where the blacklist includes a version number corresponding to that the BL program cannot be upgraded, and the instruction instructs the app in the first storage area to be upgraded before the BL program in the first storage area.

In the foregoing possible implementation, because upgrade of a BL program in a storage area is sometimes affected by a version of an app in the storage area, that is, there is a blacklist of an app version number corresponding to that the BL program cannot be upgraded, the host computer may read a bootloader version number of the app in the storage area in the controller based on a version number obtaining request, and the controller may feed back the bootloader version number of the app in the first storage area or the second storage area to the host computer. If the host computer learns through matching that the bootloader version number is in the blacklist, it indicates that the BL program in the storage area cannot be upgraded under the app of the current bootloader version number. In this case, the controller needs to be instructed, by using the instruction, to first upgrade the app in the storage area, and then upgrade the BL program in the storage area. This can improve a success rate of BL program upgrade.

In a possible implementation, the upgrade file further includes an app upgrade package and/or a calibration Cal file upgrade package, and before the setting the first storage area as the running storage area and setting the second storage area as the backup storage area in the foregoing steps, the method further includes: upgrading the app in the first storage area based on the app upgrade package; and/or upgrading a Cal file in the first storage area based on the Cal file.

In the foregoing possible implementation, the upgrade file may further include the app upgrade package and/or the Cal file upgrade package. In other words, the upgrade file may include the app upgrade package, or the Cal file upgrade package, or both the app upgrade package and the Cal file upgrade package. This is not limited herein. In this case, before changing the first storage area from the backup storage area to the running storage area, the controller further needs to upgrade the app in the first storage area and/or the Cal file in the first storage area. In other words, the app upgrade package overwrites a storage address of the app in the first storage area, and the Cal file upgrade package overwrites a storage address of the Cal file in the first storage area. This improves a program version matching degree.

In a possible implementation, the upgrade file includes an upgrade address, and the upgrading the BL program in the first storage area based on the BL program upgrade package in the foregoing steps includes: determining a first erase address based on the upgrade address, where the first erase address is an address at which the BL program in the first storage area is erased; verifying whether the first erase address is in address space in which the BL program in the first storage area is located; when the verification succeeds, erasing content at the first erase address; and storing data of the BL program upgrade package at the first erase address.

In the foregoing possible implementation, in a process in which the controller upgrades the BL program in the first storage area based on the BL program upgrade package in the upgrade file, the controller may obtain the upgrade address from the upgrade file through parsing, where the upgrade address may include an erase address corresponding to the BL program upgrade package. Because the storage area of the controller is divided into the first storage area and the second storage area, when the BL program in the first storage area needs to be upgraded, the first erase address of the BL program in the first storage area may be determined based on the erase address. In this case, the controller may verify the first erase address, and verify whether the first erase address is in address space that is allocated to the BL program and that is in the first storage area. If the first erase address is not in the address space, it indicates that the first erase address is incorrect, and a negative response may be fed back to the host computer. If the first erase address is in the address space, it indicates that the first erase address is valid, and data at the first erase address may be directly erased, and then the data of the BL program upgrade package is stored at the first erase address at which erasing is already performed, to complete upgrade of the BL program in the first storage area. An erase and write address is verified by using the allocated address space, to ensure upgrade effect of the BL program and improve an upgrade success rate of the BL program.

In a possible implementation, the upgrading the BL program in the second storage area based on the BL program upgrade package in the foregoing steps includes: determining a second erase address based on the upgrade address, where the second erase address is an address at which the BL program in the second storage area is erased; verifying whether the second erase address is in address space in which the BL program in the second storage area is located; when the verification succeeds, erasing content at the second erase address; and storing the data of the BL program upgrade package at the second erase address.

In the foregoing possible implementation, the controller may also determine, based on the upgrade address in the upgrade file, the second erase address at which the BL program in the second storage area is erased. The upgrade address may include the erase address corresponding to the BL program upgrade package. Because the storage area of the controller is divided into the first storage area and the second storage area, when the BL program in the second storage area needs to be upgraded, the second erase address of the BL program in the second storage area may be determined based on the erase address. In this case, the controller may verify the second erase address, and verify whether the second erase address is in the address space that is allocated to the BL program and that is in the second storage area. If the second erase address is not in the address space, it indicates that the second erase address is incorrect, and a negative response may be fed back to the host computer. If the second erase address is in the address space, it indicates that the second erase address is valid, and data at the second erase address may be directly erased, and then the data of the BL program upgrade package is stored at the second erase address at which erasing is already performed, to complete upgrade of the BL program in the second storage area. The erase and write address is verified by using the allocated address space, to ensure upgrade effect of the BL program and improve an upgrade success rate of the BL program.

In a possible implementation, before the setting the first storage area as the running storage area and setting the second storage area as the backup storage area in the foregoing steps, the method further includes: verifying whether a hash value of the BL program in the first storage area is the same as a hash value of the BL program in the second storage area; and when the hash values are the same, triggering the step of setting the first storage area as the running storage area and setting the second storage area as the backup storage area; or when the hash values are different, verifying integrity of the BL program in the first storage area, and when the verification succeeds, swapping a secure boot configuration value of the first storage area and a secure boot configuration value of the second storage area, and triggering the step of setting the first storage area as the running storage area and setting the second storage area as the backup storage area.

In the foregoing possible implementation, the controller further needs to detect whether the upgrade of the BL program in the first storage area is completed, which may be achieved by detecting whether the BL program in the first storage area is the same as the BL program in the second storage area, for example, by verifying whether the hash value of the BL program in the first storage area is the same as the hash value of the BL program in the second storage area, that is, comparing whether a binary of the BL program in the first storage area is the same as a binary of the BL program in the second storage area. When the binary of the BL program in the first storage area is the same as the hash value of the BL program in the second storage area, the step of setting, by the controller, the first storage area as the running storage area and setting the second storage area as the backup storage area may be triggered. When the binary of the BL program in the first storage area is different from the hash value of the BL program in the second storage area, it indicates that the BL program in the first storage area has been upgraded, but whether the upgrade is successful is unclear. In this case, the controller may further verify the integrity of the BL program in the first storage area. When the verification fails, that is, the integrity is insufficient, the BL program in the first storage area may be re-flashed, or a negative response is fed back to the host computer. When the verification succeeds, it indicates that the BL program in the first storage area is successfully upgraded, and the secure boot configuration value of the first storage area and the secure boot configuration value of the second storage area may be swapped. The secure boot configuration value is a verification basis for selecting a booting storage area when the controller is reset. In other words, the secure boot configuration value of the first storage area is set to a preferentially selected value. After the reset, the controller may use the first storage area as the running storage area, to complete the step of setting the first storage area as the running storage area and setting the second storage area as the backup storage area. Success accuracy of the upgrade in the first storage area that is changed to the running storage area is improved through hash value verification and integrity verification.

In a possible implementation, after the upgrading the BL program in the second storage area based on the BL program upgrade package in the foregoing steps, the method further includes: verifying whether a hash value of the BL program in the first storage area is the same as a hash value of the BL program in the second storage area; and when the hash values are different, triggering the step of upgrading the BL program in the second storage area based on the BL program upgrade package.

In the foregoing possible implementation, after the BL program in the second storage area is upgraded, whether the hash value of the BL program in the first storage area is the same as the hash value of the BL program in the second storage area may be further verified, that is, whether the BL program in the second storage area is successfully upgraded is determined. When the verification fails, that is, the hash value of the BL program in the first storage area is different from the hash value of the BL program in the second storage area, it indicates that the BL program in the second storage area fails to be upgraded and needs to be upgraded again. In this case, the step of upgrading the BL program in the second storage area based on the BL program upgrade package may be performed again. The hash values of the BL programs in the two storage areas are verified, and if the hash values are different, the upgrade is performed again. This improves an upgrade success rate.

In a possible implementation, after the upgrading the BL program in the second storage area based on the BL program upgrade package in the foregoing steps, the method further includes: performing a post-programming phase, where the post-programming phase is used to restore a local communication status.

In the foregoing possible implementation, after the upgrade of the BL program in the second storage area is completed, the controller and the host computer may further perform the post-programming phase. The controller makes software of the controller take effect through resetting, responds to a service instruction of the host computer, completes necessary reset work, re-enables communication between the controller and the host computer, and enables a diagnostic trouble code (diagnostic trouble code, DTC), clears the DTC, and diagnoses a session jump, so that a communication status of the controller is restored, and the controller can be normally used. In this way, the communication status is restored in a timely manner and user experience is improved.

A second aspect of this application provides a method for upgrading a controller, where the controller includes a first storage area and a second storage area, a bootloader BL program is separately stored in the first storage area and the second storage area, and the method includes: sending a version number obtaining request to the controller, where the version number obtaining request is used to read a bootloader version number of an application app in the first storage area; receiving the bootloader version number from the controller; and when the bootloader version number is in a blacklist, sending an instruction to the controller, where the blacklist includes a version number corresponding to that the BL program cannot be upgraded, and the instruction instructs the app in the first storage area to be upgraded before the BL program in the first storage area.

In the foregoing aspect, because upgrade of a BL program in a storage area is sometimes affected by a version of an app in the storage area, that is, there is a blacklist of an app version number corresponding to that the BL program cannot be upgraded, a host computer may read a bootloader version number of the app in the storage area in the controller based on a version number obtaining request, and the controller may feed back the bootloader version number of the app in the first storage area or the second storage area to the host computer. If the host computer learns through matching that the bootloader version number is in the blacklist, it indicates that the BL program in the storage area cannot be upgraded under the app of the current bootloader version number. In this case, the controller needs to be instructed, by using the instruction, to first upgrade the app in the storage area, and then upgrade the BL program in the storage area. This can improve a success rate of BL program upgrade.

In a possible implementation, the method further includes: performing a post-programming phase, where the post-programming phase is used to restore a local communication status.

A third aspect of this application provides an apparatus for upgrading a controller. The apparatus may implement the method according to any one of the first aspect or the possible implementations of the first aspect. The apparatus includes a corresponding unit or module configured to perform the method. The unit or module included in the apparatus can be implemented by software and/or hardware. For example, the apparatus may be a network device, or may be a chip, a chip system, a processor, or the like that supports the network device in implementing the foregoing method, or may be a logic module or software that can implement all or some functions of the network device.

A fourth aspect of embodiments of this application provides an apparatus for upgrading a controller. The apparatus may implement the method according to any one of the second aspect or the possible implementations of the second aspect. The apparatus includes a corresponding unit or module configured to perform the method. The unit or module included in the apparatus can be implemented by software and/or hardware. For example, the apparatus may be a network device, or may be a chip, a chip system, a processor, or the like that supports the network device in implementing the foregoing method, or may be a logic module or software that can implement all or some functions of the network device.

A fifth aspect of this application provides a computer device, including a processor, where the processor is coupled to a memory, the memory is configured to store instructions, and when the instructions are executed by the processor, the computer device is enabled to implement the method according to any one of the first aspect or the possible implementations of the first aspect. For example, the computer device may be a network device, or may be a chip, a chip system, or the like that supports the network device in implementing the foregoing method.

A sixth aspect of this application provides a computer device, including a processor, where the processor is coupled to a memory, the memory is configured to store instructions, and when the instructions are executed by the processor, the computer device is enabled to implement the method according to any one of the second aspect or the possible implementations of the second aspect. For example, the computer device may be a network device, or may be a chip, a chip system, or the like that supports the network device in implementing the foregoing method.

A seventh aspect of this application provides a computer-readable storage medium. The computer-readable storage medium stores instructions. When the instructions are executed by a processor, the method provided in any one of the first aspect or the possible implementations of the first aspect or any one of the second method or the possible implementations of the second method is implemented.

An eighth aspect of this application provides a computer program product. The computer program product includes computer program code. When the computer program code is executed on a computer, the method provided in any one of the first aspect or the possible implementations of the first aspect or any one of the second method or the possible implementations of the second method is implemented.

### BRIEF DESCRIPTION OF DRAWINGS

FIG. 1 is a diagram of an architecture of a communication transmission system according to an embodiment of this application;
FIG. 2 is a schematic flowchart of a method for upgrading a controller according to an embodiment of this application;
FIG. 3 is a schematic flowchart of pre-programming steps according to an embodiment of this application;
FIG. 4 is a schematic flowchart of re-programming steps according to an embodiment of this application;
FIG. 5 is a schematic flowchart of steps of an area switching operation according to an embodiment of this application;
FIG. 6 is a diagram in which secure boot configuration values are swapped according to an embodiment of this application;
FIG. 7 is an overall schematic flowchart in which a controller upgrades a BL program according to an embodiment of this application;
FIG. 8 is a diagram of a structure of an apparatus for upgrading a controller according to an embodiment of this application;
FIG. 9 is a diagram of a structure of another apparatus for upgrading a controller according to an embodiment of this application;
FIG. 10 is a diagram of a structure of a computer device according to an embodiment of this application; and
FIG. 11 is a diagram of a structure of another computer device according to an embodiment of this application.

### DESCRIPTION OF EMBODIMENTS

Embodiments of this application provide a node upgrade method and apparatus, to reduce workload of a host computer and a secondary node, and reduce R&D and production costs.

The following describes embodiments of this application with reference to the accompanying drawings. It is clear that the described embodiments are merely some rather than all of embodiments of this application. A person of ordinary skill in the art may learn that, with development of technologies and emergence of a new scenario, technical solutions provided in embodiments of this application are also applicable to a similar technical problem.

In this specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The following first describes related terms and concepts that may be used in embodiments of this application.
(1) Electronic control unit (electronic control unit, ECU)

The ECU is also referred to as a vehicle computer, vehicle-mounted computer, or the like, and is used as a vehicle-specific microcomputer controller or a vehicle-specific single-chip microcomputer. Like a common computer, the ECU includes a microprocessor (microcontroller unit, MCU), a read-only memory (read-only memory, ROM), a random access memory (random access memory, RAM), an input/output (I/O) interface, an analog-to-digital (A/D) converter, and a large-scale integrated circuit such as a shaper and a drive.

In the ECU, a central processing unit (central processing unit, CPU) is a core part, and has functions of computation and control. For example, when an engine is run, the central processing unit collects signals of sensors for computation, converts a result of the computation into a control signal, and controls work of a controlled object. The central processing unit further controls a memory (for example, a ROM), an I/O, and another external circuit. The ECU usually has functions of fault self-diagnosis and protection. When a fault occurs in a system, the ECU automatically records a fault code in a RAM and uses a protection measure to read a replacement program from an inherent program to maintain running of a corresponding component (such as an engine). Information about the fault is displayed on a dashboard and remains illuminated. In this way, a vehicle owner can find a problem in time and drive a vehicle to a repair store. In normal cases, the RAM continuously records data of the vehicle in a driving process and learns data recorded in real time through an adaptive program, to provide an optimal control state for adapting to the driving habits of the vehicle owner.

A conventional ECU has a relatively simple structure, and there may be dozens of or hundreds of ECUs in the entire vehicle, for example, an ECU used in an engine and an ECU used in an anti-lock braking system. A function of each ECU is relatively independent. With development of digital vehicles, especially autonomous driving technologies, ECUs on the vehicle gradually become complex and tend to be centralized on a super ECU, and consequently, it is increasingly difficult to diagnose an ECU.

### (2) Host computer

The host computer is a computer device that can directly send a control command. In embodiments of this application, a computer device that can communicate with an ECU based on a UDS protocol may be referred to as the host computer (which may also be referred to as a diagnostic instrument, a diagnostic machine, a diagnostic tool, or the like), for example, an intelligent handheld terminal device such as a personal computer (personal computer, PC), a mobile phone, or a tablet computer, an intelligent wearable device such as a smart band or a smart watch, or even a single-chip microcomputer. Any device that can run corresponding diagnostic software and can communicate with the ECU based on the UDS protocol may be used as the host computer in embodiments of this application. This is not specifically limited herein.

### (3) Unified diagnostic service (unified diagnostic service, UDS)

Development, adjustment, implementation, and maintenance of different diagnostic communication protocols bring unnecessary costs to a vehicle manufacturer, a system supplier, and an ECU supplier. To resolve this problem, different technical protocols and data communication principles are compiled into a standard defined by an international organization for standardization (international organization for standardization, ISO), which is usually referred to as UDS (also referred to as ISO 14229-1). UDS is a universal vehicle diagnostic protocol and is irrelevant to data links. UDS is for an application layer in an open system interconnection (open system interconnection, OSI) model, and may be implemented on different vehicle buses (for example, a controller area network (controller area network, CAN), a local interconnect network (local interconnect network, LIN), Flexray, the Ethernet (Ethernet), and a K-line (K-line)). Currently, most vehicle manufacturers use a UDS on CAN diagnostic protocol. To be specific, a set of instruments (usually referred to as the host computer) is used to analyze information/data inside an ECU in a current vehicle. A language used by the set of instruments to communicate with the ECU is UDS (not the only method).

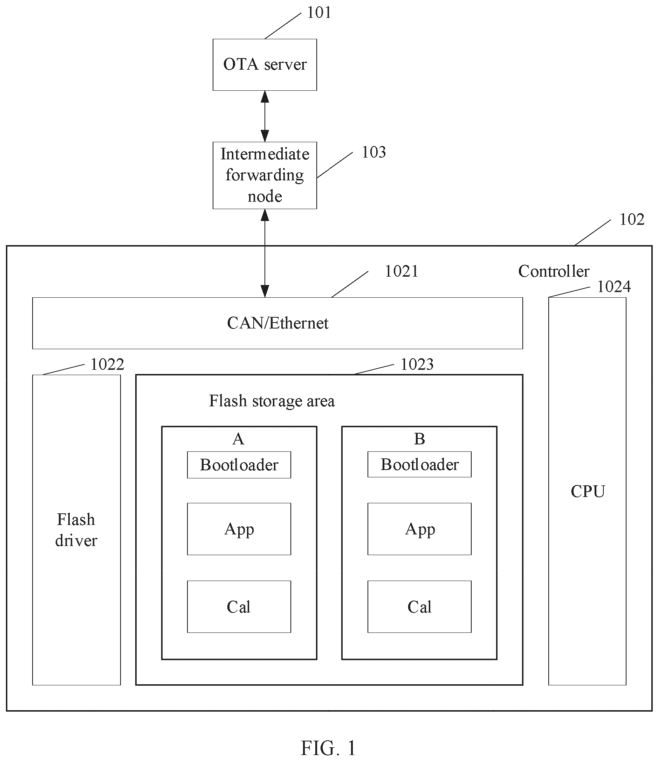

FIG. 1 is a diagram of an architecture of a communication transmission system according to an embodiment of this application. The communication system includes an over-the-air (over-the-air, OTA) server 101 and a dual-backup controller 102, where the dual-backup controller 102 includes a CAN/Ethernet communication module 1021, a flash driver (Flash Driver) module 1022, a flash (Flash) storage area 1023, and a central processing unit (central processing unit, CPU) 1024.

The OTA server implements remote management of software through a mobile communication interface. During firmware upgrade, the remote OTA server 101 transfers an upgrade instruction to the controller through the CAN/Ethernet communication module 1021 via an intermediate forwarding node 103 for upgrade.

The flash storage area 1023 includes an area A and an area B, where a bootloader (Bootloader, BL) program, where an application (application program, APP), and a calibration (calibration, Cal) file are separately stored in the area A and the area B.

The foregoing OTA server is the host computer in this application.

With evolution of vehicle electronic and electrical architectures, there are many important electronic control units in new energy vehicles, and during booting, most electronic control units need to be booted by using a BL program. The BL program is a bootloader program of a system, and is a first segment of code that is run after the system is powered on or reset, and main functions of the BL program include initialization, application security verification, and loading. For a non-dual-backup controller, the BL program further has a unified diagnostic service (unified diagnostic service, UDS) flashing function, and updates an application (application program, APP) in a BL mode. After mass production of a controller, a program loaded to the controller may have an error, and software optimization or bug (bug) repair is required.

Currently, a dual-backup controller backs up an app, and the app can be upgraded when the app is run in an app mode. Although the BL program can also be upgraded in the app mode in terms of mechanisms, because the BL program is responsible for basic booting initialization and app loading, during upgrade of the BL program, the controller is easily bricked as a result of power-off, and remote upgrade cannot be reliably performed.

To resolve the foregoing problem, an embodiment of this application provides a method for upgrading a controller. The method is described as follows.

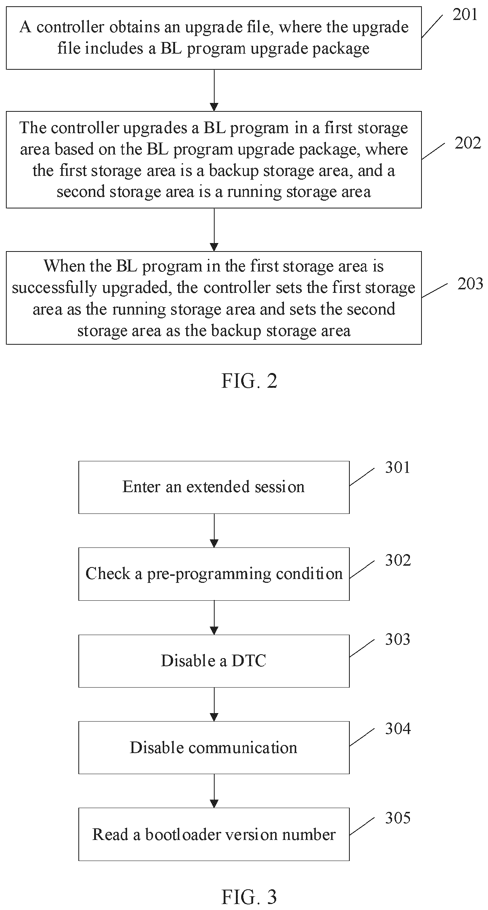

FIG. 2 is a schematic flowchart of a method for upgrading a controller according to an embodiment of this application. The method includes the following steps.

Step 201: The controller obtains an upgrade file, where the upgrade file includes a BL program upgrade package.

In this embodiment, the upgrade file is provided by an OTA server. When the OTA server needs to upgrade a BL program in the controller, the OTA server may send the upgrade file including the BL program upgrade package to the controller. Correspondingly, the controller may receive the upgrade file from the OTA server.

When determining that an ECU program of a target vehicle needs to be upgraded, a host computer may first obtain information about a controller from the target vehicle by using a version query instruction. The information includes version information of an app. Then the host computer selects a version that matches another ECU version of the target vehicle when selecting an app version of the controller. The host computer may pack each upgrade package of the controller into a total upgrade file, where the upgrade file includes the BL program upgrade package; and then enter an upgrade procedure of the host computer, that is, the host computer sends the upgrade file to the controller.

Step 202: The controller upgrades a BL program in a first storage area based on the BL program upgrade package, where the first storage area is a backup storage area, and a second storage area is a running storage area.

In this embodiment, the controller may have a plurality of storage areas, where one storage area is a running storage area, and the other storage areas are backup storage areas. Each storage area stores a BL program. In this embodiment of this application, two storage areas are used as an example. The controller currently uses the BL program in the second storage area used as the running storage area to provide a BL program service. To not stop the BL program service, the controller may first upgrade the BL program in the first storage area used as the backup storage area, that is, the BL program upgrade package overwrites a storage address of the BL program in the first storage area.

In an example, before upgrading the BL program in the first storage area based on the BL program upgrade package, in a pre-programming step, the controller further needs to receive a version number obtaining request from the host computer, send a bootloader version number of an application app in the first storage area to the host computer based on the version number obtaining request, and when the bootloader version number is in a blacklist, receive an instruction from the host computer, where the blacklist includes a version number corresponding to that the BL program cannot be upgraded, and the instruction instructs the app in the first storage area to be upgraded before the BL program in the first storage area.

Specifically, because upgrade of a BL program in a storage area is sometimes affected by a version of an app in the storage area, that is, there is a blacklist of an app version number corresponding to that the BL program cannot be upgraded, the host computer may read a bootloader version number of the app in the storage area in the controller based on a version number obtaining request, and the controller may feed back the bootloader version number of the app in the first storage area or the second storage area to the host computer. If the host computer learns through matching that the bootloader version number is in the blacklist, it indicates that the BL program in the storage area cannot be upgraded under the app of the current bootloader version number. In this case, the controller needs to be instructed, by using the instruction, to first upgrade the app in the storage area, and then upgrade the BL program in the storage area.

Specifically, the procedure of the pre-programming step is shown in FIG. 3. Step 301: Enter an extended session ($10 $03). Step 302: Check a pre-programming condition ($31). Step 303: Disable a diagnostic trouble code (diagnostic trouble code, DTC) ($85 $02). Step 304: Disable communication ($28). Step 305: Read a bootloader version number ($22 $F1FF). The controller disables the DTC and the communication to avoid a communication error and prevent the DTC from reporting an error.

The upgrade file may further include an app upgrade package and/or a Cal file upgrade package. In other words, the upgrade file may include the app upgrade package, or the Cal file upgrade package, or both the app upgrade package and the Cal file upgrade package. This is not limited herein. In this case, before changing the first storage area from the backup storage area to the running storage area, the controller further needs to upgrade the app in the first storage area and/or the Cal file in the first storage area. In other words, the app upgrade package overwrites a storage address of the app in the first storage area, and the Cal file upgrade package overwrites a storage address of the Cal file in the first storage area.

In a process in which the controller upgrades the BL program in the first storage area based on the BL program upgrade package in the upgrade file, the controller may obtain an upgrade address from the upgrade file through parsing, where the upgrade address may include an erase address corresponding to the BL program upgrade package. Because the storage area of the controller is divided into the first storage area and the second storage area, when the BL program in the first storage area needs to be upgraded, a first erase address of the BL program in the first storage area may be determined based on the erase address. In this case, the controller may verify the first erase address, and verify whether the first erase address is in address space that is allocated to the BL program and that is in the first storage area. If the first erase address is not in the address space, it indicates that the first erase address is incorrect, and a negative response may be fed back to the host computer. If the first erase address is in the address space, it indicates that the first erase address is valid, and data at the first erase address may be directly erased, and then data of the BL program upgrade package is stored at the first erase address at which erasing is already performed, to complete upgrade of the BL program in the first storage area.

Step 203: When the BL program in the first storage area is successfully upgraded, the controller sets the first storage area as the running storage area, and sets the second storage area as the backup storage area.

In this embodiment, after the upgrade of the BL program in the first storage area is completed, the first storage area in which the BL program is already upgraded may be changed to the current running storage area, to provide a better service. In this case, the first storage area is the running storage area, and the second storage area is the backup storage area.

Before performing step 203, the controller further needs to detect whether the upgrade of the BL program in the first storage area is completed, which may be achieved by detecting whether the BL program in the first storage area is the same as the BL program in the second storage area, for example, by verifying whether a hash value of the BL program in the first storage area is the same as a hash value of the BL program in the second storage area, that is, comparing whether a binary of the BL program in the first storage area is the same as a binary of the BL program in the second storage area. When the binary of the BL program in the first storage area is the same as the hash value of the BL program in the second storage area, the step of setting, by the controller, the first storage area as the running storage area and setting the second storage area as the backup storage area may be triggered. When the binary of the BL program in the first storage area is different from the hash value of the BL program in the second storage area, it indicates that the BL program in the first storage area has been upgraded, but whether the upgrade is successful is unclear. In this case, the controller may further verify integrity of the BL program in the first storage area. When the verification fails, that is, the integrity is insufficient, the BL program in the first storage area may be re-flashed, or a negative response is fed back to the host computer. When the verification succeeds, it indicates that the BL program in the first storage area is successfully upgraded, and a secure boot configuration value of the first storage area and a secure boot configuration value of the second storage area may be swapped. The secure boot configuration value is a verification basis for selecting a booting storage area when the controller is reset. In other words, the secure boot configuration value of the first storage area is set to a preferentially selected value. After the reset, the controller may use the first storage area as the running storage area, to complete the step of setting the first storage area as the running storage area and setting the second storage area as the backup storage area.

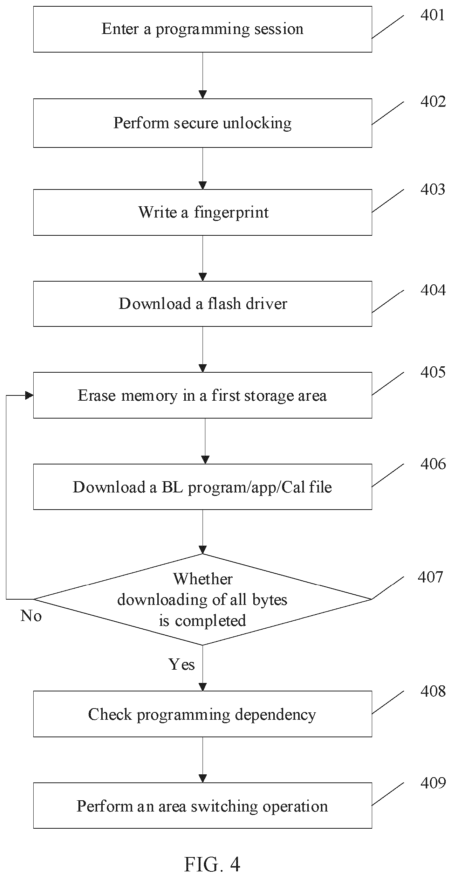

In other words, in this embodiment of this application, an execution manner of erasing memory is modified in a re-programming phase, and an area switching operation is added. A procedure of the re-programming phase is shown in FIG. 4. Step 401: Enter a programming session ($10 $02). Step 402: Perform secure unlocking ($27). Step 403: Write a fingerprint ($2E $F184). Step 404: Download a flash driver (Flash Driver). Step 405: Erase memory in a first storage area ($31 $01 $FF00). Step 406: Download a BL program/app/Cal file. Step 407: Determine whether downloading of all bytes is completed, and if downloading of all bytes is completed, perform step 408; and if downloading of all bytes is not completed, perform step 405. Step 408: Check programming dependency. Step 409: Perform the area switching operation.

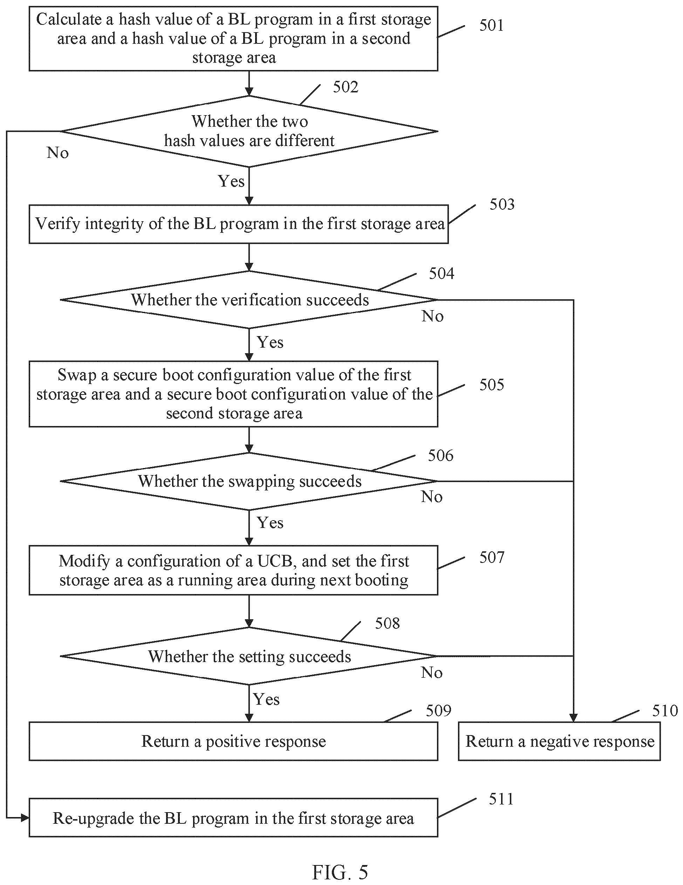

A specific execution procedure of step 409 may be shown in FIG. 5. Step 501: Calculate a hash value of a BL program in a first storage area and a hash value of a BL program in a second storage area. Step 502: Compare whether the two hash values are different, and if the two hash values are different, perform step 503; and if the two hash values are not different, perform step 511. Step 503: Verify integrity of the BL program in the first storage area. Step 504: Determine whether the verification succeeds, and if the verification succeeds, perform step 505; and if the verification fails, perform step 510. Step 505: Swap a secure boot configuration value of the first storage area and a secure boot configuration value of the second storage area. Step 506: Determine whether the swapping succeeds, and if the swapping succeeds, perform step 507; and if the swapping fails, perform step 510. Step 507: Modify a configuration of a user configuration block (user configuration block, UCB), and set the first storage area as a running area during next booting. Step 508: Determine whether the setting succeeds, and if the setting succeeds, perform step 509; and if the setting fails, perform step 510. Step 509: Return a positive response. Step 510: Return a negative response. Step 511: Re-upgrade the BL program in the first storage area.

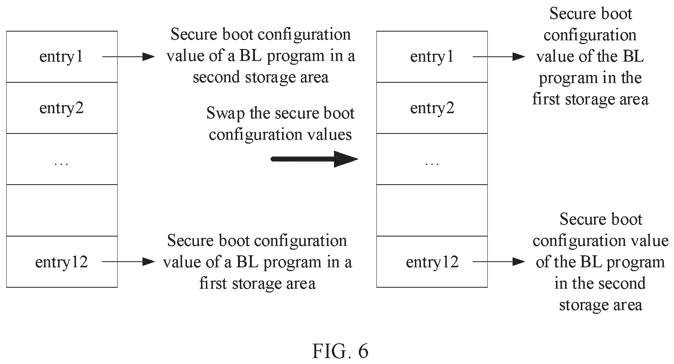

For a diagram in which the secure boot configuration value of the first storage area and the secure boot configuration value of the second storage area are swapped, refer to FIG. 6. Originally, the secure boot configuration value of the second storage area is entry 1, and the secure boot configuration value of the first storage area is entry 12. After the swapping, the secure boot configuration value of the second storage area is entry 12, and the secure boot configuration value of the first storage area is entry1. In this case, subsequently, each time the controller is booted, booting verification is first performed on the entry1, and the first storage area is used for booting if the verification succeeds.

An integrity verification manner may be: If what is most recently flashed is a BL program file, whether a format of a version number of a BL program is correct is first verified (to verify that the BL program file instead of an app or another file is flashed, where the version number of the BL program is fixedly stored at a start position of a BL program code segment). If the verification fails, an integrity flag bit BootOK _Flag (uint8)=0 of the BL program in a peer area is recorded, and is stored in an EEPROM, and then a negative response is returned. If the verification on the version number of the BL program succeeds, it indicates that the BL program file is flashed. Then, the integrity verification is performed on the BL program. If the signature verification succeeds, a cypher-based message authentication code (cypher-based message authentication code, CMAC) value of the BL program in the peer area is updated, and is stored in a specific position (for example, entry12) in a UCB, and then a positive response is returned. If the signature verification fails, a Boot integrity flag bit BootOK _Flag (uint8)=0 of the peer area is recorded, and is stored in the EEPROM, and then a negative response is returned.

After the first storage area is changed to the running storage area, the BL program in the second storage area currently used as the backup storage area may further continue to be upgraded, so that when the first storage area is faulty, the second storage area that has a latest BL program may be switched to for running. This improves user experience.

In an example, the controller may also determine, based on the upgrade address in the upgrade file, a second erase address at which the BL program in the second storage area is erased. The upgrade address may include the erase address corresponding to the BL program upgrade package. Because the storage area of the controller is divided into the first storage area and the second storage area, when the BL program in the second storage area needs to be upgraded, the second erase address of the BL program in the second storage area may be determined based on the erase address. In this case, the controller may verify the second erase address, and verify whether the second erase address is in address space that is allocated to the BL program and that is in the second storage area. If the second erase address is not in the address space, it indicates that the second erase address is incorrect, and a negative response may be fed back to the host computer. If the second erase address is in the address space, it indicates that the second erase address is valid, and data at the second erase address may be directly erased, and then the data of the BL program upgrade package is stored at the second erase address at which erasing is already performed, to complete upgrade of the BL program in the second storage area.

Alternatively, for a procedure in which the controller upgrades the BL program in the second storage area, refer to the procedure in FIG. 4. Details are not described herein again.

After the BL program in the second storage area is upgraded, whether the hash value of the BL program in the first storage area is the same as the hash value of the BL program in the second storage area may be further verified. In other words, whether the BL program in the second storage area is successfully upgraded is determined. When the verification fails, that is, the hash value of the BL program in the first storage area is different from the hash value of the BL program in the second storage area, it indicates that the BL program in the second storage area fails to be upgraded and needs to be upgraded again. In this case, the step of upgrading the BL program in the second storage area based on the BL program upgrade package may be performed again.

After the BL program in the second storage area is upgraded, the controller and the host computer may further perform a post-programming phase. The controller makes software of the controller take effect through resetting, responds to a service instruction of the host computer, completes necessary reset work, re-enables communication between the controller and the host computer, enables the DTC, clears the DTC, and diagnoses a session jump, so that a communication status of the controller is restored, and the controller can be normally used.

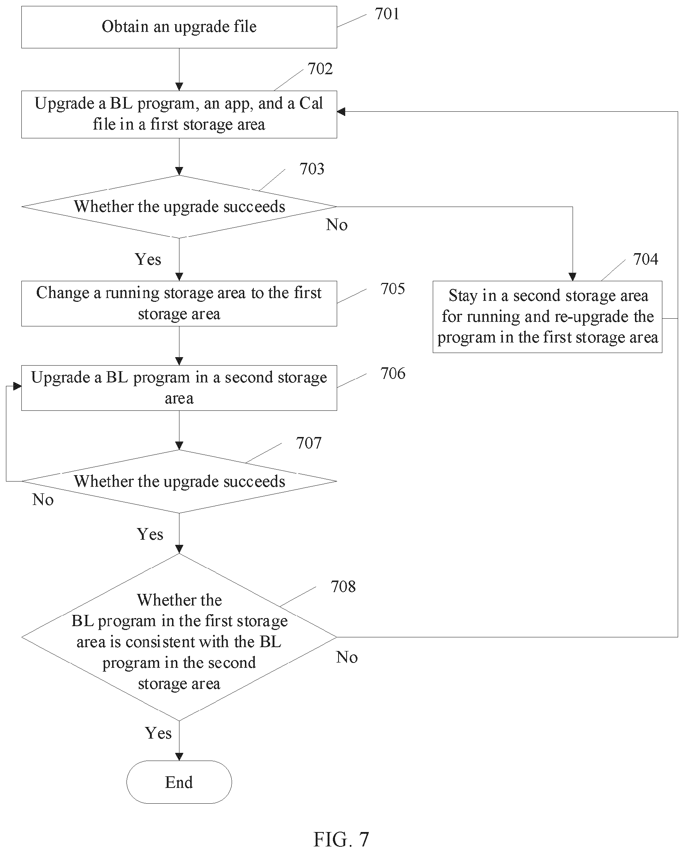

For an overall schematic flowchart in which a controller upgrades a BL program in this embodiment of this application, refer to FIG. 7. Step 701: A controller obtains an upgrade file. Step 702: The controller upgrades a BL program, an app, and a Cal file in a first storage area. Step 703: Detect whether the upgrade in the first storage area succeeds, and if the upgrade in the first storage area succeeds, perform step 705; and if the upgrade in the first storage area does not succeed, perform step 704. Step 704: The controller stays in a second storage area for running and re-upgrades the program in the first storage area. Step 705: The controller changes a running storage area to the first storage area. Step 706: The controller upgrades a BL program in the second storage area. Step 707: Detect whether the BL program in the second storage area is successfully upgraded, and if the BL program in the second storage area is successfully upgraded, perform step 708; and if the BL program in the second storage area is not successfully upgraded, perform step 706. Step 708: Verify whether the BL program in the first storage area is consistent with the BL program in the second storage area, and if the BL program in the first storage area is consistent with the BL program in the second storage area, complete the upgrade; and if the BL program in the first storage area is not consistent with the BL program in the second storage area, perform step 702.

In this embodiment of this application, the BL program in the first storage area used as the backup storage area in the controller is first upgraded based on the BL program upgrade package in the upgrade file. After the upgrade succeeds, the first storage area is set as the running storage area, and the second storage area is set as the backup storage area. During upgrade of the BL program in one storage area, the BL program in the other storage area may be used to provide a service, to avoid bricking the controller as a result of power-off in an upgrade process of the BL program, and improve a success rate of remote upgrade.

The foregoing describes a method for upgrading a controller, and the following describes an apparatus for executing the method.

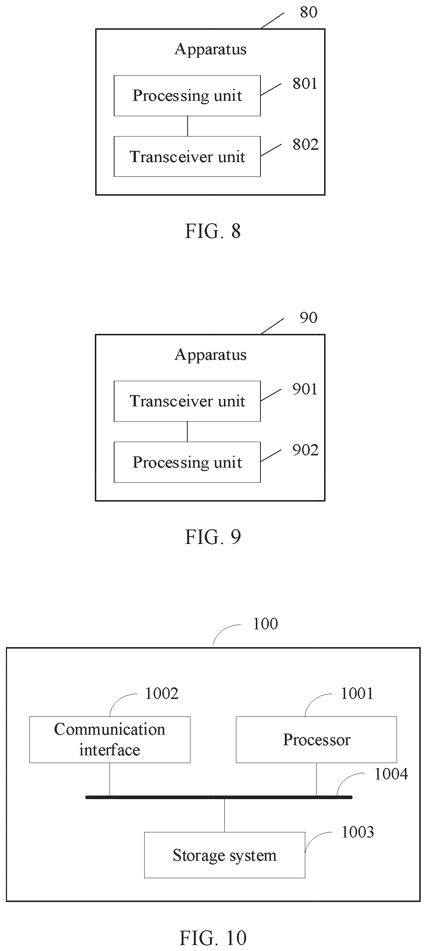

FIG. 8 shows an apparatus for upgrading a controller according to an embodiment of this application. The controller includes a first storage area and a second storage area, and a bootloader BL program is separately stored in the first storage area and the second storage area. The apparatus 80 includes:
a processing unit 801, configured to: obtain an upgrade file, where the upgrade file includes a BL program upgrade package; upgrade the BL program in the first storage area based on the BL program upgrade package, where the first storage area is a backup storage area, and the second storage area is a running storage area; and when the BL program in the first storage area is successfully upgraded, set the first storage area as the running storage area, and set the second storage area as the backup storage area.

The processing unit 801 is configured to perform step 201 to step 203 in the method embodiment in FIG. 2.

Optionally, the processing unit 801 is further configured to upgrade the BL program in the second storage area based on the BL program upgrade package.

Optionally, the apparatus 80 further includes a transceiver unit 802, and the transceiver unit 802 is specifically configured to:
receive a version number obtaining request from a host computer;
send a bootloader version number of an application app in the first storage area to the host computer based on the version number obtaining request; and
when the bootloader version number is in a blacklist, receive an instruction from the host computer, where the blacklist includes a version number corresponding to that the BL program cannot be upgraded, and the instruction instructs the app in the first storage area to be upgraded before the BL program in the first storage area.

Optionally, the upgrade file further includes an app upgrade package and/or a calibration Cal file upgrade package, and the processing unit 801 is further configured to:
upgrade the app in the first storage area based on the app upgrade package; and/or upgrade the Cal file in the first storage area based on the Cal file.

Optionally, the upgrade file includes an upgrade address, and the processing unit 801 is specifically configured to:
determine a first erase address based on the upgrade address, where the first erase address is an address at which the BL program in the first storage area is erased;
verify whether the first erase address is in address space in which the BL program in the first storage area is located;
when the verification succeeds, erase content at the first erase address; and
store data of the BL program upgrade package at the first erase address.

Optionally, the processing unit 801 is specifically configured to:
determine a second erase address based on the upgrade address, where the second erase address is an address at which the BL program in the second storage area is erased;
verify whether the second erase address is in address space in which the BL program in the second storage area is located;
when the verification succeeds, erase content at the second erase address; and store the data of the BL program upgrade package at the second erase address.

Optionally, the processing unit 801 is further configured to:
verify whether a hash value of the BL program in the first storage area is the same as a hash value of the BL program in the second storage area; and
when the hash values are the same, trigger the step of setting the first storage area as the running storage area and setting the second storage area as the backup storage area; or
when the hash values are different, verify integrity of the BL program in the first storage area, and
when the verification succeeds, swap a secure boot configuration value of the first storage area and a secure boot configuration value of the second storage area, and trigger the step of setting the first storage area as the running storage area and setting the second storage area as the backup storage area.

Optionally, the processing unit 801 is further configured to:
verify whether a hash value of the BL program in the first storage area is the same as a hash value of the BL program in the second storage area; and
when the hash values are different, trigger the step of upgrading the BL program in the second storage area based on the BL program upgrade package.

Optionally, the processing unit 801 is further configured to:
perform a post-programming phase, where the post-programming phase is used to restore a local communication status.

FIG. 9 shows another apparatus for upgrading a controller according to an embodiment of this application. The controller includes a first storage area and a second storage area, and a bootloader BL program is separately stored in the first storage area and the second storage area. The apparatus 90 includes:
a transceiver unit 901, configured to: send a version number obtaining request to the controller, where the version number obtaining request is used to read a bootloader version number of an application app in the first storage area, receive the bootloader version number from the controller, and when the bootloader version number is in a blacklist, send an instruction to the controller, where the blacklist includes a version number corresponding to that the BL program cannot be upgraded, and the instruction instructs the app in the first storage area to upgrade before the BL program in the first storage area.

Optionally, the apparatus 90 further includes a processing unit 902, and the processing unit 902 is specifically configured to:
perform a post-programming phase, where the post-programming phase is used to restore a local communication status.

FIG. 10 is a diagram of a possible logical structure of a computer device 100 according to an embodiment of this application. The computer device 100 includes a processor 1001, a communication interface 1002, a storage system 1003, and a bus 1004. The processor 1001, the communication interface 1002, and the storage system 1003 are connected to each other through the bus 1004. In this embodiment of this application, the processor 1001 is configured to control and manage an action of the computer device 100. For example, the processor 1001 is configured to perform the steps performed by the controller in the method embodiment in FIG. 2. The communication interface 1002 is configured to support the computer device 100 in performing communication. The storage system 1003 is configured to store a program code and data of the computer device 100.

The processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 1001 may be a combination implementing a computing function, for example, a combination of one or more microprocessors or a combination of a digital signal processor and a microprocessor. The bus 1004 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used to represent the bus in FIG. 10, but this does not mean that there is only one bus or only one type of bus.

The transceiver unit 802 in the apparatus 80 is equivalent to the communication interface 1002 in the computer device 100, and the processing unit 801 in the apparatus 80 is equivalent to the processor 1001 in the computer device 100.

The computer device 100 in this embodiment may correspond to the controller in the method embodiment in FIG. 2. The communication interface 1002 in the computer device 100 may implement functions and/or various steps implemented by the controller in the method embodiment in FIG. 2. For brevity, details are not described herein again.

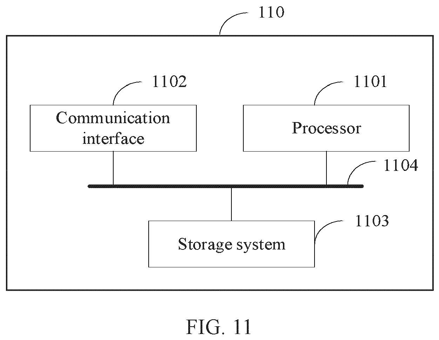

FIG. 11 is a diagram of a possible logical structure of a computer device 110 according to an embodiment of this application. The computer device 110 includes a processor 1101, a communication interface 1102, a storage system 1103, and a bus 1104. The processor 1101, the communication interface 1102, and the storage system 1103 are connected to each other through the bus 1104. In this embodiment of this application, the processor 1101 is configured to control and manage an action of the computer device 110. For example, the processor 1101 is configured to perform the steps performed by the host computer in the method embodiment in FIG. 2. The communication interface 1102 is configured to support the computer device 110 in performing communication. The storage system 1103 is configured to store a program code and data of the computer device 110.

The processor 1101 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 1101 may be a combination implementing a computing function, for example, a combination of one or more microprocessors or a combination of a digital signal processor and a microprocessor. The bus 1104 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used to represent the bus in FIG. 11, but this does not mean that there is only one bus or only one type of bus.

The transceiver unit 901 in the apparatus 90 is equivalent to the communication interface 1102 in the computer device 110, and the processing unit 902 in the apparatus 90 is equivalent to the processor 1101 in the computer device 110.

The computer device 110 in this embodiment may correspond to the host computer in the method embodiment in FIG. 2. The communication interface 1102 in the computer device 110 may implement functions and/or various steps implemented by the host computer in the method embodiment in FIG. 2. For brevity, details are not described herein again.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, the unit in any one of the foregoing apparatuses may be one or more integrated circuits configured to implement the foregoing method, for example, one or more application-specific integrated circuits (application-specific integrated circuit, ASIC), or one or more microprocessors (digital signal processor, DSP), or one or more field programmable gate arrays (field programmable gate array, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

In another embodiment of this application, a computer-readable storage medium is further provided. The computer-readable storage medium stores computer-executable instructions. When a processor of a device executes the computer-executable instructions, the device performs the method performed by a primary control node in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by a primary control node in the foregoing method embodiment.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A method for upgrading a controller, wherein the controller comprises a first storage area and a second storage area, a bootloader BL program is separately stored in the first storage area and the second storage area, and the method comprises:
obtaining an upgrade file, wherein the upgrade file comprises a BL program upgrade package;
upgrading the BL program in the first storage area based on the BL program upgrade package, wherein the first storage area is a backup storage area, and the second storage area is a running storage area; and
when the BL program in the first storage area is successfully upgraded, setting the first storage area as the running storage area and setting the second storage area as the backup storage area.

2. The method according to claim 1, wherein after the setting the first storage area as the running storage area and setting the second storage area as the backup storage area, the method further comprises:
upgrading the BL program in the second storage area based on the BL program upgrade package.

3. The method according to claim 1 or 2, wherein before the upgrading the BL program in the first storage area based on the BL program upgrade package, the method further comprises:
receiving a version number obtaining request from a host computer;
sending a bootloader version number of an application app in the first storage area to the host computer based on the version number obtaining request; and
when the bootloader version number is in a blacklist, receiving an instruction from the host computer, wherein the blacklist comprises a version number corresponding to that the BL program cannot be upgraded, and the instruction instructs the app in the first storage area to be upgraded before the BL program in the first storage area.

4. The method according to any one of claims 1 to 3, wherein the upgrade file further comprises an app upgrade package and/or a calibration Cal file upgrade package, and before the setting the first storage area as the running storage area and setting the second storage area as the backup storage area, the method further comprises:
upgrading the app in the first storage area based on the app upgrade package; and/or
upgrading a Cal file in the first storage area based on the Cal file.

5. The method according to any one of claims 1 to 4, wherein the upgrade file comprises an upgrade address, and the upgrading the BL program in the first storage area based on the BL program upgrade package comprises:
determining a first erase address based on the upgrade address, wherein the first erase address is an address at which the BL program in the first storage area is erased;
verifying whether the first erase address is in address space in which the BL program in the first storage area is located;
when the verification succeeds, erasing content at the first erase address; and
storing data of the BL program upgrade package at the first erase address.

6. The method according to claim 5, wherein the upgrading the BL program in the second storage area based on the BL program upgrade package comprises:
determining a second erase address based on the upgrade address, wherein the second erase address is an address at which the BL program in the second storage area is erased;
verifying whether the second erase address is in address space in which the BL program in the second storage area is located;
when the verification succeeds, erasing content at the second erase address; and
storing the data of the BL program upgrade package at the second erase address.

7. The method according to any one of claims 1 to 6, wherein before the setting the first storage area as the running storage area and setting the second storage area as the backup storage area, the method further comprises:
verifying whether a hash value of the BL program in the first storage area is the same as a hash value of the BL program in the second storage area; and
when the hash values are the same, triggering the step of setting the first storage area as the running storage area and setting the second storage area as the backup storage area; or
when the hash values are different, verifying integrity of the BL program in the first storage area, and
when the verification succeeds, swapping a secure boot configuration value of the first storage area and a secure boot configuration value of the second storage area, and triggering the step of setting the first storage area as the running storage area and setting the second storage area as the backup storage area.

8. The method according to claim 2, wherein after the upgrading the BL program in the second storage area based on the BL program upgrade package, the method further comprises:
verifying whether a hash value of the BL program in the first storage area is the same as a hash value of the BL program in the second storage area; and
when the hash values are different, triggering the step of upgrading the BL program in the second storage area based on the BL program upgrade package.

9. The method according to claim 2 or 8, wherein after the upgrading the BL program in the second storage area based on the BL program upgrade package, the method further comprises:
performing a post-programming phase, wherein the post-programming phase is used to restore a local communication status.

10. A method for upgrading a controller, wherein the controller comprises a first storage area and a second storage area, a bootloader BL program is separately stored in the first storage area and the second storage area, and the method comprises:
sending a version number obtaining request to the controller, wherein the version number obtaining request is used to read a bootloader version number of an application app in the first storage area;
receiving the bootloader version number from the controller; and
when the bootloader version number is in a blacklist, sending an instruction to the controller, wherein the blacklist comprises a version number corresponding to that the BL program cannot be upgraded, and the instruction instructs the app in the first storage area to be upgraded before the BL program in the first storage area.

11. The method according to claim 10, wherein the method further comprises:
performing a post-programming phase, wherein the post-programming phase is used to restore a local communication status.

12. An apparatus for upgrading a controller, wherein the controller comprises a first storage area and a second storage area, a bootloader BL program is separately stored in the first storage area and the second storage area, and the apparatus comprises:
a processing unit, configured to: obtain an upgrade file, wherein the upgrade file comprises a BL program upgrade package; upgrade the BL program in the first storage area based on the BL program upgrade package, wherein the first storage area is a backup storage area, and the second storage area is a running storage area; and when the BL program in the first storage area is successfully upgraded, set the first storage area as the running storage area and set the second storage area as the backup storage area.

13. The apparatus according to claim 12, wherein the processing unit is further configured to:
upgrade the BL program in the second storage area based on the BL program upgrade package.

14. The apparatus according to claim 12 or 13, wherein the apparatus further comprises a transceiver unit, and the transceiver unit is specifically configured to:
receive a version number obtaining request from a host computer;
send a bootloader version number of an application app in the first storage area to the host computer based on the version number obtaining request; and
when the bootloader version number is in a blacklist, receive an instruction from the host computer, wherein the blacklist comprises a version number corresponding to that the BL program cannot be upgraded, and the instruction instructs the app in the first storage area to be upgraded before the BL program in the first storage area.

15. The apparatus according to any one of claims 12 to 14, wherein the upgrade file further comprises an app upgrade package and/or a calibration Cal file upgrade package, and the processing unit is further configured to:
upgrade the app in the first storage area based on the app upgrade package; and/or
upgrade a Cal file in the first storage area based on the Cal file.

16. The apparatus according to any one of claims 12 to 15, wherein the upgrade file comprises an upgrade address, and the processing unit is specifically configured to:
determine a first erase address based on the upgrade address, wherein the first erase address is an address at which the BL program in the first storage area is erased;
verify whether the first erase address is in address space in which the BL program in the first storage area is located;
when the verification succeeds, erase content at the first erase address; and
store data of the BL program upgrade package at the first erase address.

17. The apparatus according to claim 16, wherein the processing unit is specifically configured to:
determine a second erase address based on the upgrade address, wherein the second erase address is an address at which the BL program in the second storage area is erased;
verify whether the second erase address is in address space in which the BL program in the second storage area is located;
when the verification succeeds, erase content at the second erase address; and
store the data of the BL program upgrade package at the second erase address.

18. The apparatus according to any one of claims 12 to 17, wherein the processing unit is further configured to:
verify whether a hash value of the BL program in the first storage area is the same as a hash value of the BL program in the second storage area; and
when the hash values are the same, trigger the step of setting the first storage area as the running storage area and setting the second storage area as the backup storage area; or
when the hash values are different, verify integrity of the BL program in the first storage area, and
when the verification succeeds, swap a secure boot configuration value of the first storage area and a secure boot configuration value of the second storage area, and trigger the step of setting the first storage area as the running storage area and setting the second storage area as the backup storage area.

19. The apparatus according to claim 13, wherein the processing unit is further configured to:
verify whether a hash value of the BL program in the first storage area is the same as a hash value of the BL program in the second storage area; and
when the hash values are different, trigger the step of upgrading the BL program in the second storage area based on the BL program upgrade package.

20. The apparatus according to claim 13 or 19, wherein the processing unit is further configured to:
perform a post-programming phase, wherein the post-programming phase is used to restore a local communication status.

21. An apparatus for upgrading a controller, wherein the controller comprises a first storage area and a second storage area, a bootloader BL program is separately stored in the first storage area and the second storage area, and the apparatus comprises:
a transceiver unit, configured to: send a version number obtaining request to the controller, wherein the version number obtaining request is used to read a bootloader version number of an application app in the first storage area; receive the bootloader version number from the controller; and when the bootloader version number is in a blacklist, send an instruction to the controller, wherein the blacklist comprises a version number corresponding to that the BL program cannot be upgraded, and the instruction instructs the app in the first storage area to upgrade before the BL program in the first storage area.

22. The apparatus according to claim 21, wherein the apparatus further comprises a processing unit, and the processing unit is specifically configured to:
perform a post-programming phase, wherein the post-programming phase is used to restore a local communication status.

23. A computer device, comprising a processor, wherein the processor is coupled to a memory, and
the processor is configured to execute instructions stored in the memory, to enable the computer device to perform the method according to any one of claims 1 to 9.

24. A computer device, comprising a processor, wherein the processor is coupled to a memory, and
the processor is configured to execute instructions stored in the memory, to enable the computer device to perform the method according to claim 10 or 11.

25. A computer-readable storage medium, wherein the computer-readable storage medium stores instructions, and when the instructions are executed by a processor, the method according to any one of claims 1 to 11 is implemented.

26. A computer program product, wherein the computer program product comprises computer program code, and when the computer program code is run on a computer, the method according to any one of claims 1 to 11 is implemented.
